# EUROPEAN PATENT SPECIFICATION

(11) **EP 2 689 425 B1**
(45) Date of publication and mention of the grant of the patent: **23.03.2016**
(21) Application number: 12713016.9
(22) Date of filing: 26.03.2012
(51) Int. Cl.: G21C 9/00, G21D 3/04, G21C 17/112

(54) **METHOD AND DEVICE FOR OPTIMIZING OPERATING MARGIN IN A NUCLEAR REACTOR**
VERFAHREN UND VORRICHTUNG ZUR OPTIMIERUNG DER BETRIEBSMARGE BEI EINEM KERNREAKTOR
PROCÉDÉ ET DISPOSITIF D'OPTIMISATION D'UNE MARGE DE FONCTIONNEMENT DANS UN RÉACTEUR NUCLÉAIRE

(30) Priority: 24.03.2011 EP 11159675
(43) Date of publication of application: 29.01.2014
(73) Proprietor: Westinghouse Electric Belgium, 1400 Nivelles (BE)
(72) Inventor: THAULEZ, Francis, B-7100 La Louviere (BE)
(74) Representative: Quintelier, Claude
(86) International application number: PCT/EP2012/055337
(87) International publication number: WO 2012/127061

(56) References cited:
- US-A- 3 998 693
- US-A- 5 631 937
- US-B1- 7 596 198
- KEE IN W ET AL: "Assessment of core protection and monitoring systems for an advanced reactor SMART", ANNALS OF NUCLEAR ENERGY, PERGAMON PRESS, OXFORD, GB, vol. 29, no. 5, 1 March 2002 (2002-03-01), pages 609-621, XP027339864, ISSN: 0306-4549 [retrieved on 2002-03-01]

## Description

The invention relates to a method for optimizing operating margin in a nuclear reactor, said nuclear reactor having a steam generator, a reactor coolant system having a hot leg with a temperature Thot, and a cold leg with a temperature Tcold, an over power delta temperature reactor trip system having an over power delta temperature anticipatory turbine runback control function, said method comprises :
- measuring a temperature in the hot leg of the reactor coolant system and providing a hot leg temperature signal on the basis of said measured hot leg temperature;
- measuring a temperature in the cold leg of the reactor coolant system and providing a cold leg temperature signal on the basis of said measured cold leg temperature;
- determining an over power delta temperature trip set-point for the reactor trip system on the basis of the measured hot and cold leg temperature;
- determining a difference between said hot leg and said cold leg temperature signal;
- comparing the determined difference between the hot leg temperature signal and the cold leg temperature signal to said over power delta temperature trip set-point;
- reducing the turbine load when the determined difference between the hot leg temperature signal and the cold leg temperature signal exceeds the over power delta temperature turbine runback set-point.

Such a method is described as prior art in US-A- 7,596,198. To ensure that specified acceptable fuel design limits of a pressurized water reactor (PWR) are not exceeded, a reactor trip system (RTS) is typically employed. The RTS is designed to automatically initiate the rapid insertion of the control rods, commonly referred to as the reactor scram function, of the reactivity control system by interrupting electrical power to the rod control system and allowing the control rods to fall by gravity into the reactor core. Generally, the RTS includes a variety of different devices such as for example power sources, sensors, communication links, software/firmware, initiation circuits, logic matrices, bypasses, interlocks, switchgear, actuation logic, and actuation devices, which are required to initiate a reactor trip. Using such devices, the RTS initiates a trip and shut downs the reactor when established set-points are surpassed.

Among the reactor trip functions that the RTS provides are for pressurized water reactors an Over Power Delta Temperature (OPDT) trip, which is designed to protect against excessive power, i.e., fuel rod rating protection, and an Over Temperature Delta Temperature (OTDT) trip. Two relevant inputs to these trip functions are the reactor coolant narrow range hot leg temperature measurement (Thot) and the reactor coolant narrow range cold leg temperature measurement (Tcold), which intervene in OPDT and OTDT via their delta temperature (ΔT) and their average value (Tavg). ΔT is filtered and lead/lag compensated before being compared to a variable OPDT set-point and to a variable OTDT set-point. Both set-points are variable versus Tavg. For three or four loop plants, there is one OPDT and one OTDT per loop in different process protection sets with a voting in two out of three or four. In two loop plants, there has to be two process protection sets associated to each loop and a voting in two out of four.

In addition to OPDT and OTDT reactor trip, an OPDT and OTDT turbine runback function is also generally provided, with the same arrangement as the one for reactor trip, but with a bias which makes them to actuate first and reduce the load in an attempt to avoid an OPDT or OTDT reactor trip.

In most PWR's, Thot and Tcold are obtained by either of two ways, immersed RTD's in a RTD bypass system or thermowell mounted RTDs directly on the loops. As far as Thot is concerned, in the former case, water from three scoops at 120 degrees is hydraulically mixed before being used for the Thot RTD's placed in the bypass lines while, in the latter case, the signals from the individual RTD's are electronically averaged to generate the average Thot.

A drawback of the known method is that there exists a temperature streaming in the hot leg which is due to the incomplete mixing of reactor coolant flow leaving fuel assemblies at different temperatures. One consequence of it is Thot fluctuations due to moving mixing boundary between turbulent flow streams. The temperature gradient and its fluctuations effects have increased over time at many plants due to the transition to fuel low leakage loading patterns. This has caused various operation problems, one of which being unwanted partial actuation alarms or actual actuations (more than one signal to the voting logic) of mainly OPDT (and to a lesser extent OTDT).

An object of the present invention is to provide an optimized solution to the problem of unwanted OPDT actuations forcing operation to take place at reduced power.

For this purpose a method according to the present invention is characterised in that said hot leg temperature signal is determined by applying a filtering on said measured hot leg temperature and said cold leg temperature signal is determined by applying a lead/lag compensation on said measured cold leg temperature, an over power temperature turbine run back set-point being set and wherein said turbine runback being activated to reduce turbine load when the determined difference between the hot leg temperature signal and the cold leg temperature signal exceeds the set over power delta temperature turbine runback set-point. With no filtering and a lead/lag compensation on Tcold, the requested effectiveness of the over power temperature function can be easily achieved, while without lead/lag compensation on Thot, no amplification of measurement fluctuations arises. Since the effectiveness of the over power temperature function is ensured by compensated Tcold, the Thot filter can be adjusted without losing effectiveness of the over power temperature function to a high lag time constant, enabling a high attenuation of the measurement fluctuations. In addition to elimination of amplification of fluctuations by lead/lag, the values of the lag time constant which can be selected as a result of this method are much higher than the values which can be obtained by the prior art method. This permits operating margins much higher than the known methods.

A preferred embodiment of a method according to the present invention is characterised in that said measured hot leg temperature being filtered with a filter having a time constant situated of at least 5 seconds, in particular 7 seconds, said lead/lag compensation on said measured cold leg temperature having a time constant of at least 25 seconds, in particular 30 seconds. This enables a reduction of the output fluctuations by a factor three in comparison to the prior art.

The invention will now be described in more detail with respect to the annexed drawings. In the drawings :
figure 1 illustrates the method according to the prior art;
figure 2 illustrates the method according to US-A- 7,596,198;
figure 3 illustrates the method according to the present invention;
figure 4 shows the OPDT output fluctuations as obtained with the method of the prior art;
figure 5 shows the OPDT output fluctuations as obtained with the method of the present invention;
figures 6 and 7 illustrate time histories of Thot and Tcold for HFP SLB limiting case at a selected plant; and
figure 8 shows the OPDT for HFP SLB limiting case at the selected plant.

In the drawings a same reference sign has been allocated to a same or analogous element.

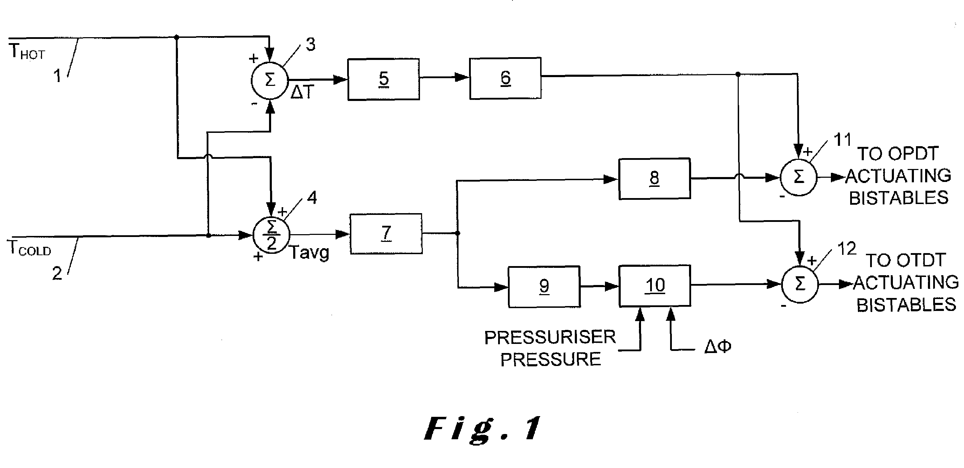

Figure 1 illustrates the method according to the prior art. The method is applied in a nuclear reactor (not shown), which has a steam generator, a reactor coolant system having a hot leg with a temperature Thot, and a cold leg with a temperature Tcold. The reactor is provided with a trip function having a first input line 1 of the measured hot leg temperature and a second input line 2 of the measured cold leg temperature. The measurement of these temperatures is known as such and is commonly realised by Resistance Temperature Detectors (RTDs). The input lines are each connected to a first 3 and a second 4 calculating member. The first calculating member 3 is provided for determining the temperature difference ΔT between the measured hot and cold leg temperature, whereas the second calculating member is provided for determining an average temperature value Tavg between the measured hot and cold leg temperature.

An output of the first calculating member is connected to a first filter 5 provided for filtering the determined temperature difference ΔT. The filtered temperature difference ΔT is thereafter lead/lag compensated by the first lead/lag compensation unit 6. An output of the second calculating member is connected to a second filter 7 provided for filtering the determined average temperature value. The thus obtained filtered average temperature signal is on the one hand supplied to an Over Power Delta Temperature (OPDT) set-point unit 8 and on the other hand to a second lead/lag compensation unit 9. An output of the second lead/lag compensation unit is connected to an Over Temperature Delta Temperature (OTDT) set-point unit 10. The Over Power Delta Temperature (OPDT) set-point unit 8, respectively the Over Temperature Delta Temperature (OPDT) set-point unit 10 is provided for determining on the basis of the received input signal an Over Power Delta Temperature (OPDT) set-point, respectively an Over Temperature Delta Temperature (OPDT) set-point.

An output of the Over Power Delta Temperature (OPDT) set-point unit 8, respectively of the Over Temperature Delta Temperature (OTDT) set-point unit 10, is connected to a control input of a first 11, respectively a second 12 comparator. The first respectively the second comparator are provided for comparing the filtered and lead/lag compensated temperature difference to the OPDT respectively the OTDT set-point and for generating a control signal when the filtered and lead/lag compensated temperature difference exceeds the respective set-points. Among these set-points there is a first level set-point, which is preferably set to a level corresponding with a 105% power capacity of the reactor. When such a control signal is generated upon exceeding the first level set-point, the turbine load is reduced. Upon reaching a second level set-point of OPDT respectively OTDT, which second level set-points preferably are set to a level corresponding with a 108% power capacity of the reactor, the control signal causes the nuclear reactor to be tripped.

As described in the preamble of the present patent application such a method has some drawbacks as operating margin is lost. In the prior art different approaches have been proposed in order to overcome these drawbacks.

A first approach which has been followed to recover operating margin with respect to unwanted OPDT and OTDT actuations is to modify the ΔT lead/lag ratio, even going so far as setting it to one for some plants, and to increase the ΔT filter lag time constant, and sometimes the Tavg filter lag time constant. In some cases, nuclear design margins have also been used to increase the static margin provided by the actuation set-points. These modifications have to be supported by a re-analysis of all the accidents which are mitigated by OPDT or OTDT, to demonstrate that the reduced safety margin is still acceptable.

A second approach which only applies to plants with the RTD bypass eliminated, i.e. which have individual thermowell mounted RTD's at 120 degrees, is the subject of US patent 5,253,190 of Oct; 12, 1993. In summary, it is possible to generate the average Thot from the three individual Thot measurements by using appropriate unequal weighting and compensating the result by an appropriate bias. This approach can be beneficial if the fluctuations of the RTD's are of significant unequal magnitude and, in particular, if the fluctuations of one of the RTD's are of significantly higher magnitude than those of the two other RTD's. In such case, this one measurement can be low weighted and the fluctuations of Thot average are reduced.

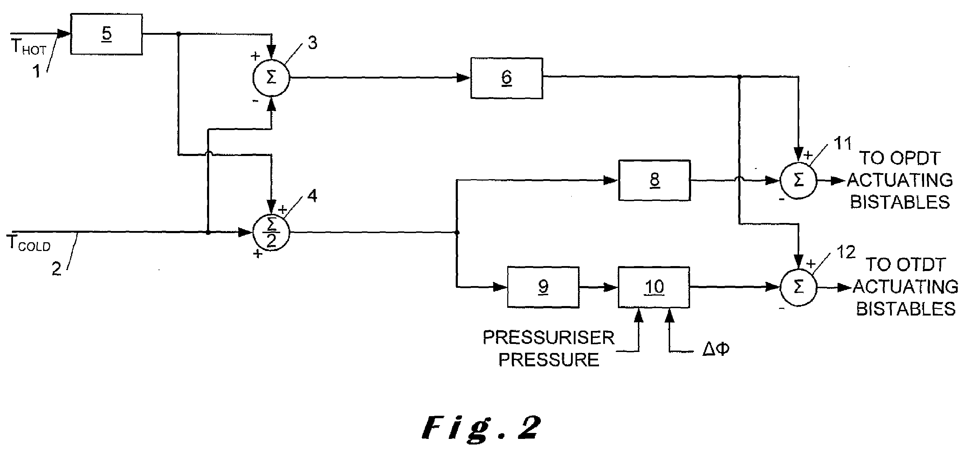

A third approach which is available is the subject of US patent 7,596,198 and is illustrated in figure 2. It consists in applying the ΔT filter 5 on Thot only and not on Tavg, such that Tcold no longer gets filtered. This creates safety margin for the analysis of steam line break at full power (HFP SLB), which is mitigated by OPDT, owing to the faster reacting Tcold hence faster reacting OPDT. This margin can be used to increase the lag time constant of Thot filter, which in turn can provide a small reduction of OPDT (and OTDT) output fluctuations. The benefit which can be achieved on those in this way is relatively small. Additionally, because of the increased Thot filter lag time constant, the accidents mitigated by OTDT need to be re-analyzed for acceptability of the reduced safety margin, mainly the rod withdrawal at power accident. Of course if more than the created HFP SLB margin is used for increasing Thot filter lag time constant, for the benefit of further reduced OPDT (and OTDT) fluctuations, the HFP SLB accident also needs to be re-analyzed for acceptability of the reduced safety margin (all accidents mitigated by OPDT or OTDT as for first approach).

For different reasons, the first and the second approaches could not be applied in the selected plant. The third approach was attempted by relocation of ΔT filter on Thot only for OPDT. With OTDT unmodified, there was no need to re-analyze the accidents mitigated by OTDT. The one accident which is mitigated by OPDT in this third approach is Hot Full Power Steamline Break (HFP SLB).

To comply with a requirement of no accident re-analysis despite the OPDT modification, the present invention proposes a method which uses a model of the OPDT system with as inputs the Thot and Tcold time histories from the limiting case of the HFP SLB analysis of record, and compares the OPDT output without modifications (Figure 1) and with modifications (figure 2).

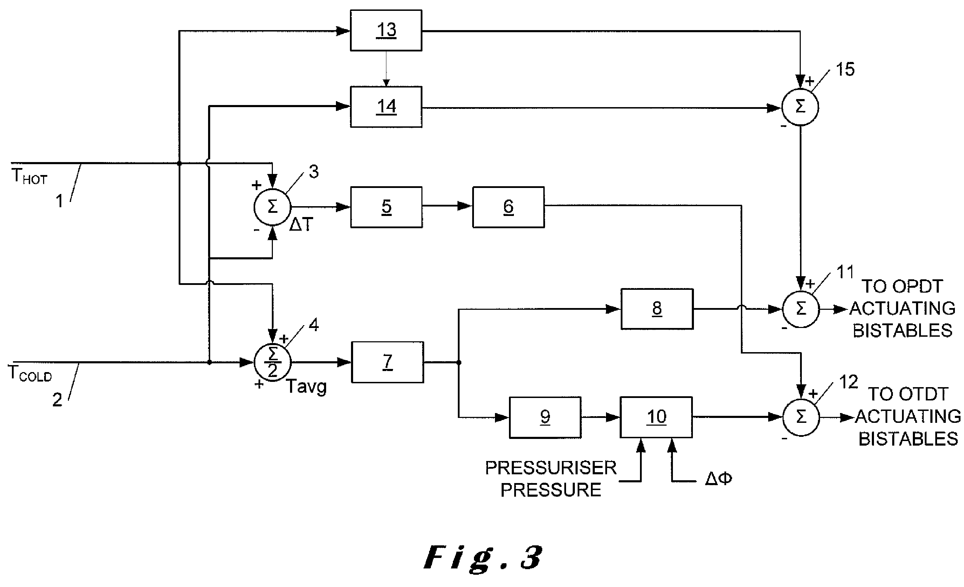

Since improvement in operating margin by the method in previous paragraph is limited, another approach was used. The method according to the present invention is illustrated in figure 3 and comprises a modification to the OPDT turbine runback and reactor trip system without modification to the OTDT turbine runback and reactor trip system. The method distinguishes over the one illustrated in figure 1 in that a third filter 13 is connected with the input line 1 and provided for filtering the measured hot leg temperature. The cold leg temperature input line 2 is connected with a third lead/lag compensation unit 14. At the output of the third filter there is output a hot leg temperature signal, whereas at the output of the third lead/lag compensation unit there is output a cold leg temperature signal. The hot and the cold leg temperature signal are each supplied to a respective input of a third calculation unit 15 provided for determining a further temperature difference between the cold and the hot leg temperature signal. An output of the third calculation unit is connected to an input of the first comparator 11, which compares the further temperature difference value with the set Over Power Delta Temperature set-point and generates a control signal when the further temperature difference exceeds the OPDT turbine runback set-point value and a protection signal when it exceeds the OPDT reactor trip set-point value.

Thus in the present invention the ΔT or third filter 13 is only applied on Thot such that Tcold as such is no longer filtered as it is the case in the prior art. Moreover, in the present invention the lead/lag compensation is only applied on Tcold as such by means of the third lead/lag filter 14, such that Thot is no longer lead/lag compensated. This modification is such that OTDT is not affected. Consequently, the accidents which are mitigated by OTDT are not affected. The elimination of Thot lead/lag compensation in OPDT eliminates any dynamic amplification of Thot fluctuations in the present method. This even enables to increase the lead/lag lead time constant and thereby speed up OPDT with the effect to increase the safety margin of the HFP SLB accident. By re-using a small fraction of the created safety margin to increase Thot filter lag time constant, the highest possible reduction in OPDT output fluctuations can be achieved.

In this way, compensated ΔT becomes the difference between filtered Thot and lead/lag compensated Tcold. This permits to increase the safety margin in case of HFP SLB by increasing the lead time constant hence the OPDT Tcold effect and therefore OPDT response itself in case of HFP SLB, while removing any amplification of Thot measurement fluctuations at OPDT output. The same approach, as previously mentioned, to avoid the need for OPDT accident re-analysis, was followed. The method of the invention uses a model of the OPDT system with as inputs the Thot and Tcold time histories from the limiting case of the HFP SLB analysis of record, and compares the OPDT output with modifications (Figure 3) and without modifications (Figure 1). The maximum value of the OPDT output must be higher than that of the reference case with accelerated timing. When compared to the first and third approaches, the fluctuations reduction factor is higher while the accidents mitigated by OTDT are not affected, and the accident mitigated by OPDT, namely HFP SLB, ends up with an improved safety margin, all of which is not true with these other approaches.

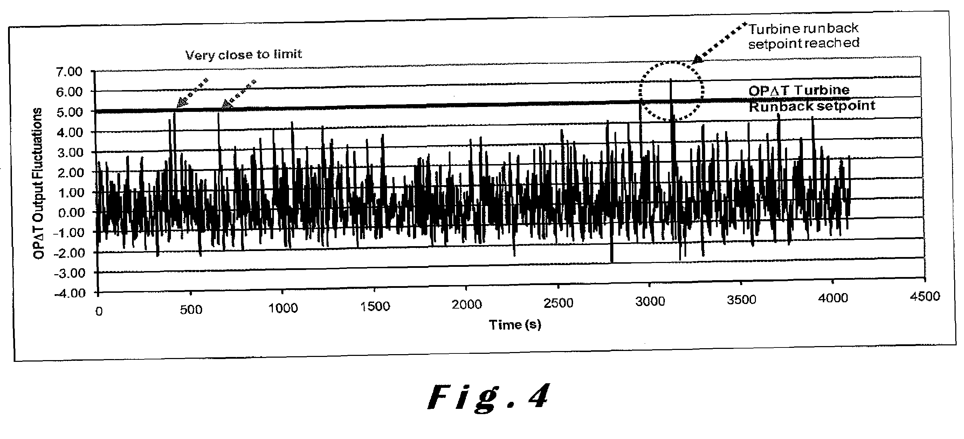

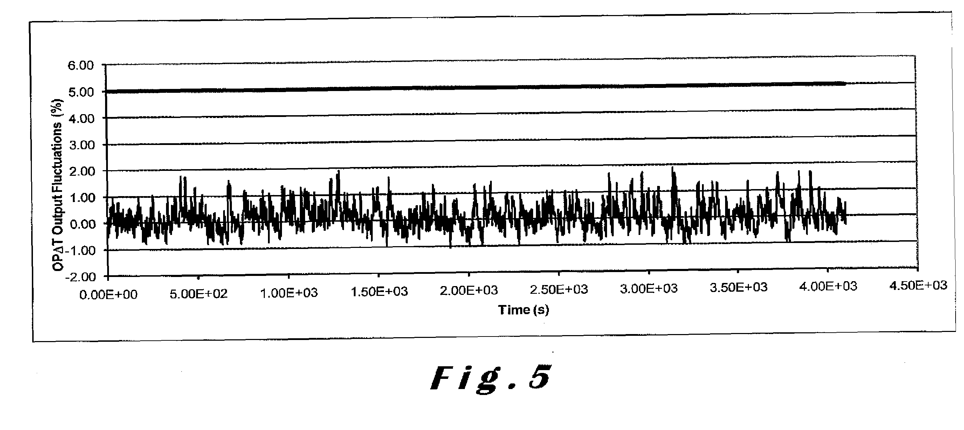

Figure 4 shows the full power OPDT signal of a nuclear reactor output by the first comparison unit 11 with the OPDT determined according to the method of the prior art (figure 1). For the signal of figure 4 the first filter 5 has a 2 seconds filter constant and the first lead/lag compensation unit 6 has a lead time constant of 23 seconds and a lag time constant of 10 s. As can be seen in figure 4, the signal shows considerable fluctuations. Figure 5 shows the full power OPDT signal output at the output of the third comparison unit 15 of the invention. For the signal of figure 5 the third filter 13 has a 7 seconds filter constant and the third lead/lag compensation unit 14 has a lead time constant of 30 seconds. The reduction of the output fluctuations by a factor of three is visible and this is achieved with increase of safety margin on OPDT accidents and without impact on OTDT accidents. The filter time constant of the third filter is at least 5 seconds and the lead/lag lead time constant is at least 25 seconds.

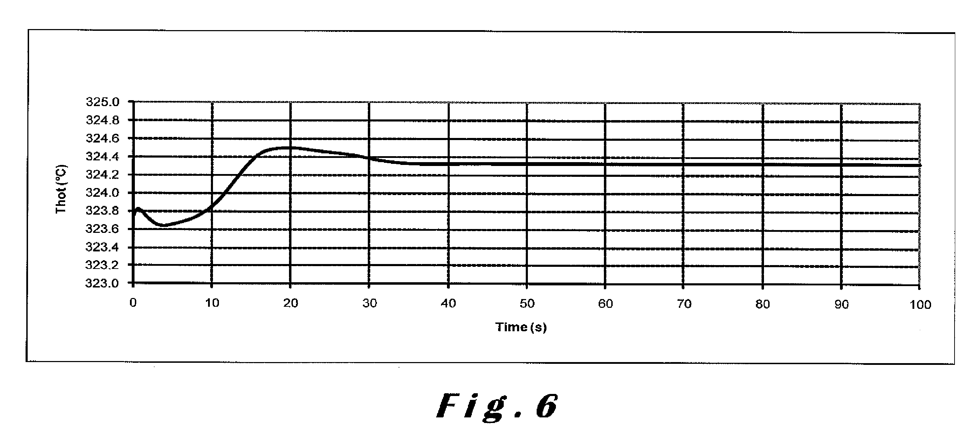

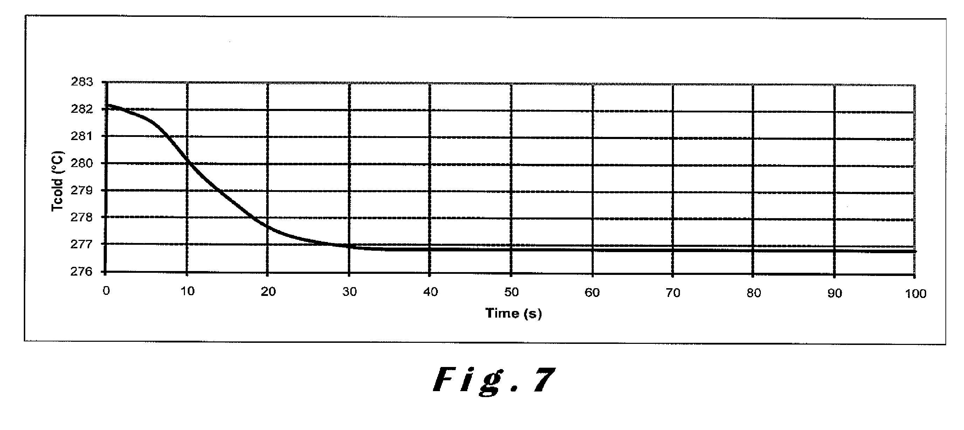

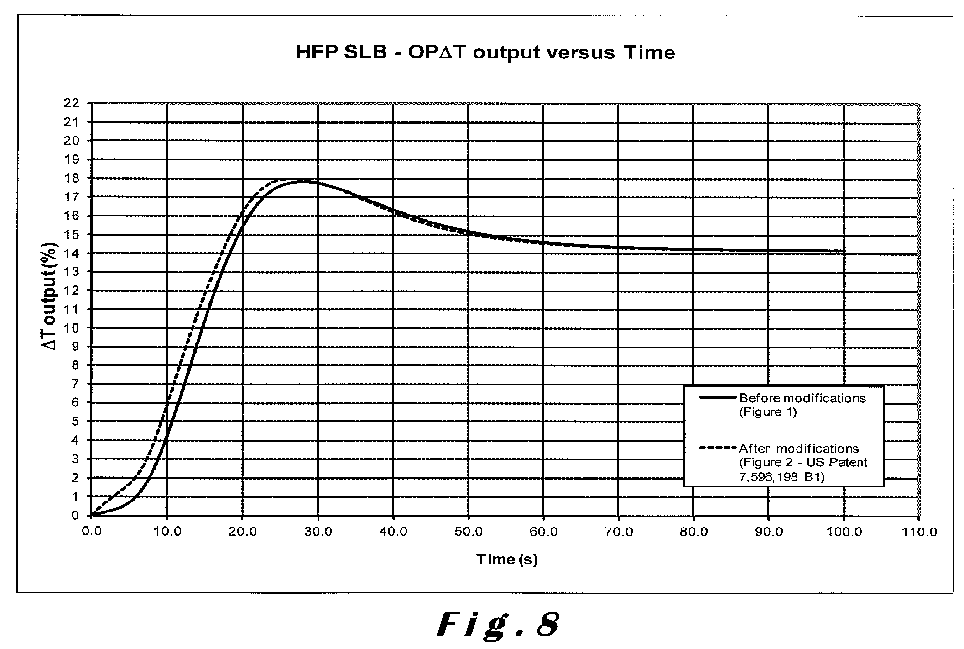

A method, not being part of the invention, is also disclosed to ensure that the HFP SLB safety margin is increased without going through a reanalysis of the accident The method, which is illustrated by figures 6 to 8, uses a model of the OPDT system with as inputs the Thot and Tcold time histories from the limiting case of the HFP SLB analysis of record (figures 6 and 7, respectively), and compares the OPDT output with and without modifications. It should be noted that what is illustrated in figures 6 to 8 is only given for illustration purposes without being within the scope of the claims. The maximum value of the OPDT output must be higher than that of the reference case with accelerated timing as illustrated in figure 8 (dotted line for the present invention, and plane line for the prior art per figure 1). The measurements were realized in a nuclear reactor situated in Belgium (Thiange II).

It is to be noted that the invention can be used not only for best optimization of steady-state OPDT margin, but also to ensure fulfillment of HFP SLB analysis criteria, should they be challenged, by increasing Tcold lead/lag lead time constant as required to achieve this purpose without adversely impacting OPDT steady-state margin.

## Claims

1. A method for optimizing operating margin in a nuclear reactor, said nuclear reactor having a steam generator, a reactor coolant system having a hot leg with a temperature Thot, and a cold leg with a temperature Tcold, an over power delta temperature reactor trip system having an over power delta temperature anticipatory turbine runback control function, said method comprises :
- measuring a temperature in the hot leg of the reactor coolant system and providing a hot leg temperature signal Thot on the basis of said measured hot leg temperature;
- measuring a temperature in the cold leg of the reactor coolant system and providing a cold leg temperature signal U on the basis of said measured cold leg temperature;
- determining (8) an over power delta temperature trip set-point for the reactor trip system on the basis of the measured hot and cold leg temperature;
- determining a difference between said hot leg and said cold leg temperature signal;
- comparing (11) the determined difference between the hot leg temperature signal and the cold leg temperature signal to said over power delta temperature trip set-point;
- reducing the turbine load when the determined difference between the hot leg temperature signal and the cold leg temperature signal exceeds the over power delta temperature turbine runback set-point;
**characterised in that** said hot leg temperature signal is determined by applying a filtering (13) on said measured hot leg temperature and said cold leg temperature signal is determined by applying a lead/lag compensation (14) on said measured cold leg temperature, an over power temperature turbine run back set-point being set and wherein said turbine runback being activated to reduce turbine load when the determined difference between the hot leg temperature signal and the cold leg temperature signal exceeds the set over power delta temperature turbine runback set-point.

2. The method according to claim 1, **characterised in that** a further difference is determined between the measured hot and cold leg temperature, said further difference being filtered as far as Thot is concerned and a lead/lag compensated as far as Tcold is concerned.

3. The method according to claim 1 or 2, **characterised in that** said measured hot leg temperature being filtered with a filter having a time constant of at least 5 seconds, in particular 7 seconds, said lead/lag compensation on said measured cold leg temperature having a lead time constant of at least 25 seconds, in particular 30 seconds.

4. A device for optimizing operating margin in a nuclear reactor, said nuclear reactor having a steam generator, a reactor coolant system having a hot leg with a temperature Thot, and a cold leg with a temperature Tcold, a reactor trip system having an over power delta temperature anticipatory turbine runback control function, said reactor trio system having a first input line (1) of the measured hot leg temperature and a second input line (2) of the measured cold leg temperature, said device comprises :
- temperature measuring means for measuring a temperature in the hot leg respectively the cold leg of the reactor coolant system and providing a hot leg respectively a cold leg temperature signal on the basis of said measured hot respectively cold leg temperature;
- trip set-point determining means (8) provided for determining an over power delta temperature trip set-point for the reactor trip system on the basis of the measured hot and cold leg temperature;
- temperature difference determining means (15) provided for determining a difference between said hot leg and said cold leg temperature signal;
- comparing means (11) provided for comparing the determined difference between the hot leg temperature signal and the cold leg temperature signal to said over power delta temperature trip set-point;
- means provided for reducing the turbine load of the nuclear reactor when the determined difference between the hot leg temperature signal and the cold leg temperature signal exceeds the over power delta temperature trip set-point;
**characterised in that** said device comprises a filter (13) connected with the first input line (1)
and provided for receiving said measured hot leg temperature and for determining said hot leg temperature signal by applying a filtering on said measured hot leg temperature, said device further comprising a lead/lag compensation unit (14) connected with the second input line (2)
for receiving the measured cold leg temperature and provided for determining said cold leg temperature signal by applying a lead/lag compensation on said measured cold leg temperature an output of said filter and an output of said lead/lag compensation unit being connected to an input of the temperature difference determining means (15), said device also comprises an over power temperature turbine run back set-point unit (10)
provided for activating said reactor to reduce turbine load when the determined difference between the hot leg temperature signal and the cold leg temperature signal exceeds the set over power delta temperature turbine runback set-point.

## Patentansprüche

1. Verfahren zum Optimieren einer Betriebsspanne in einem Kernreaktor, wobei der Kernreaktor aufweist: einen Dampfgenerator, ein Reaktorkühlmittelsystem, das einen heißen Strang mit einer Temperatur Thot und einen kalten Strang mit einer Temperatur Tcold aufweist, ein Überleistungs-Differenztemperatur-Reaktor-Schnellabschaltsystem (Over Power Delta Temperatur Reactor Trip), das eine vorausschauende Überleistungs-Differenztemperatur-Turbinenrücklauf-Steuerfunktion aufweist, wobei das Verfahren umfasst:
- Messen einer Temperatur in dem heißen Strang des Reaktorkühlmittelsystems und Bereitstellen eines Heißstrangtemperatursignals Thot auf der Grundlage der gemessenen Heißstrangtemperatur;
- Messen einer Temperatur in dem kalten Strang des Reaktorkühlmittelsystems und Bereitstellen eines Kaltstrangtemperatursignals U auf der Grundlage der gemessenen Kaltstrangtemperatur;
- Bestimmen (8) eines Überleistungs-Differenztemperatur-Schnellabschaltsollwertes für das Reaktor-Schnellabschaltsystem auf der Grundlage der gemessenen Heiß- und Kaltstrangtemperatur;
- Bestimmen einer Differenz zwischen dem Heißstrang- und dem Kaltstrangtemperatursignal;
- Vergleichen (11) der bestimmten Differenz zwischen dem Heißstrangtemperatursignal und dem Kaltstrangtemperatursignal mit dem Überleistungs-Differenztemperatur-Schnellabschaltsollwert;
- Reduzieren der Turbinenlast, wenn die bestimmte Differenz zwischen dem Heißstrangtemperatursignal und dem Kaltstrangtemperatursignal den Überleistungs-Differenztemperatur-Turbinenrücklauf-Sollwert übersteigt;
**dadurch gekennzeichnet, dass** das Heißstrangtemperatursignal durch Anwenden einer Filterung (13) auf die gemessene Heißstrangtemperatur bestimmt wird, und das Kaltstrangtemperatursignal durch Anwenden einer Voreilungs-/Nacheilungskompensation (14) auf die gemessene Kaltstrangtemperatur bestimmt wird, wobei ein Überleistungstemperatur-Turbinenrücklauf-Sollwert eingestellt wird, und wobei der Turbinenrücklauf aktiviert wird, um die Turbinenlast zu reduzieren, wenn die bestimmte Differenz zwischen dem Heißstrangtemperatursignal und dem Kaltstrangtemperatursignal den eingestellten Überleistungs-Differenztemperatur-Turbinenrücklauf-Sollwert übersteigt.

2. Verfahren nach Anspruch 1, **dadurch gekennzeichnet, dass** eine weitere Differenz zwischen der gemessenen Heiß- und Kaltstrangtemperatur bestimmt wird, wobei die weitere Differenz in Bezug auf Thor gefiltert wird und in Bezug auf Tcold Voreilungs-/Nacheilungs-kompensiert wird.

3. Verfahren nach Anspruch 1 oder 2, **dadurch gekennzeichnet, dass** die gemessene Heißstrangtemperatur mit einem Filter gefiltert wird, das eine Zeitkonstante von mindestens 5 Sekunden, insbesondere 7 Sekunden, aufweist, und dass die Voreilungs-/Nacheilungskompensation an der gemessenen Kaltstrangtemperatur eine Voreilungszeitkonstante von mindestens 25 Sekunden, insbesondere 30 Sekunden, aufweist.

4. Vorrichtung zum Optimieren einer Betriebsspanne in einem Kernreaktor, wobei der Kernreaktor aufweist: einen Dampfgenerator, ein Reaktorkühlmittelsystem, das einen heißen Strang mit einer Temperatur Thot und einen kalten Strang mit einer Temperatur Tcold aufweist, ein Reaktor-Schnellabschaltsystem, das eine vorausschauende Überleistungs-Differenztemperatur-Turbinenrücklauf-Steuerfunktion aufweist, wobei das Reaktor-Schnellabschaltsystem eine erste Eingangsleitung (1) der gemessenen Heißstrangtemperatur und eine zweite Eingangsleitung (2) der gemessenen Kaltstrangtemperatur aufweist, wobei die Vorrichtung umfasst:
- eine Temperaturmesseinrichtung zum Messen einer Temperatur in dem heißen Strang bzw. dem kalten Strang des Reaktorkühlmittelsystems und Bereitstellen eines Heißstrang- bzw. Kaltstrangtemperatursignals auf der Grundlage der gemessenen Heiß- bzw. Kaltstrangtemperatur;
- eine Schnellabschaltsollwert-Bestimmungseinrichtung (8), die zum Bestimmen eines Überleistungs-Differenztemperatur-Schnellabschaltsollwertes für das Reaktor-Schnellabschaltsystem auf der Grundlage der gemessenen Heiß- und Kaltstrangtemperatur vorgesehen ist;
- eine Temperaturdifferenz-Bestimmungseinrichtung (15), die zum Bestimmen einer Differenz zwischen dem Heißstrang- und dem Kaltstrangtemperatursignal vorgesehen ist;
- Vergleichseinrichtung (11), die zum Vergleichen der bestimmten Differenz zwischen dem Heißstrangtemperatursignal und dem Kaltstrangtemperatursignal mit dem Überleistungs-Differenztemperatur-Schnellabschaltsollwert vorgesehen ist;
- eine Einrichtung, die zum Reduzieren der Turbinenlast des Kernreaktors vorgesehen ist, wenn die bestimmte Differenz zwischen dem Heißstrangtemperatursignal und dem Kaltstrangtemperatursignal den Überleistungs-Differenztemperatur-Schnellabschaltsollwert übersteigt;
**dadurch gekennzeichnet, dass** die Vorrichtung ein Filter (13) umfasst, das mit der ersten Eingangsleitung (1) verbunden ist und zum Empfangen der gemessenen Heißstrangtemperatur und zum Bestimmen des Heißstrangtemperatursignals durch Anwenden einer Filterung auf die gemessene Heißstrangtemperatur vorgesehen ist, wobei die Vorrichtung ferner eine Voreilungs-/Nacheilungskompensationseinheit (14) umfasst, die mit der zweiten Eingangsleitung (2) zum Empfangen der gemessenen Kaltstrangtemperatur verbunden ist und zum Bestimmen des Kaltstrangtemperatursignals durch Anwenden einer Voreilungs-/Nacheilungskompensation auf die gemessene Kaltstrangtemperatur vorgesehen ist, wobei ein Ausgang des Filters und ein Ausgang der Voreilungs-/Nacheilungskompensationseinheit mit einem Eingang der Temperaturdifferenz-Bestimmungseinrichtung (15) verbunden sind, wobei die Vorrichtung außerdem eine Überleistungstemperatur-Turbinenrücklauf-Sollwert-Einheit (10) umfasst, die zum Aktivieren des Reaktors vorgesehen ist, um die Turbinenlast zu reduzieren, wenn die bestimmte Differenz zwischen dem Heißstrangtemperatursignal und dem Kaltstrangtemperatursignal den eingestellten Überleistungs-Differenztemperatur-Turbinenrücklauf-Sollwert übersteigt.

## Revendications

1. Procédé pour optimiser une marge de fonctionnement dans un réacteur nucléaire, ledit réacteur nucléaire ayant un générateur de vapeur, un système de refroidissement du réacteur ayant une branche chaude avec une température Thot et une branche froide avec une température Tcold, un système d'arrêt du réacteur en surpuissance ayant une fonction de contrôle anticipatoire de réduction de puissance de la turbine en surpuissance, ledit procédé comprend :
- mesurer une température dans la branche chaude du système de refroidissement du réacteur et fournir un signal de température de branche chaude Thot sur la base de ladite température mesurée dans la branche chaude ;
- mesurer une température dans la branche froide du système de refroidissement du réacteur et fournir un signal de température de branche froide U sur la base de ladite température mesurée dans la branche froide;
- déterminer (8) un point de consigne d'arrêt en surpuissance pour le système d'arrêt du réacteur sur la base de la température mesurée dans la branche chaude et la branche froide ;
- déterminer une différence entre ledit signal de température de la branche chaude et de la branche froide ;
- comparer (11) la différence déterminée entre le signal de température de la branche chaude et le signal de température de la branche froide audit point de consigne d'arrêt en surpuissance ;
- réduire la charge de la turbine quand la différence déterminée entre le signal de température de la branche chaude et le signal de température de la branche froide dépasse le point de consigne de réduction de puissance de la turbine en surpuissance ;
**caractérisé en ce que** ledit signal de température de la branche chaude est déterminé en appliquant un filtrage (13) à ladite température mesurée dans la branche chaude et ledit signal de température de la branche froide est déterminé en appliquant une compensation par avance / retard (14) à ladite température mesurée dans la branche froide, un point de consigne de réduction de puissance de la turbine en surpuissance étant fixé et dans lequel ladite réduction de puissance de la turbine est activée pour réduire la charge de la turbine quand la différence déterminée entre le signal de température de la branche chaude et le signal de température de la branche froide dépasse le point de consigne de réduction de puissance de la turbine en surpuissance .

2. Procédé selon la revendication 1, **caractérisé en ce qu'**une autre différence est déterminée entre la température mesurée dans la branche chaude et dans la branche froide, ladite autre différence étant filtrée **en ce que** concerne Thot et étant compensée par avance / retard en ce qui concerne Tcold.

3. Procédé selon la revendication 1 ou 2, **caractérisé en ce que** ladite température mesurée dans la branche chaude est filtrée avec un filtre ayant une constante de temps d'au moins 5 secondes, en particulier 7 secondes, ladite compensation par avance / retard de ladite température mesurée dans la branche froide ayant une constante de temps d'avance d'au moins 25 secondes, en particulier 30 secondes.

4. Dispositif pour optimiser une marge de fonctionnement dans un réacteur nucléaire, ledit réacteur nucléaire ayant un générateur de vapeur, un système de refroidissement du réacteur ayant une branche chaude avec une température Thot et une branche froide avec une température Tcold, un système d'arrêt du réacteur ayant une fonction de contrôle anticipatoire du réduction de puissance de la turbine en surpuissance, ledit système d'arrêt du réacteur ayant une première ligne d'entrée (1) de la température mesurée dans la branche chaude et une deuxième ligne d'entrée (2) de la température mesurée dans la branche froide, ledit dispositif comprend :
- des moyens de mesure de la température pour mesurer une température dans la branche chaude respectivement la branche froide du système de refroidissement du réacteur et pour fournir un signal de température de la branche chaude respectivement de la branche froide sur la base de ladite température mesurée dans la branche chaude respectivement la branche froide ;
- des moyens de détermination d'un point de consigne d'arrêt (8) prévus pour déterminer un point de consigne d'arrêt en surpuissance pour le système d'arrêt du réacteur sur la base de la température mesurée dans la branche chaude et la branche froide ;
- des moyens de détermination de la différence de température (15) prévus pour déterminer une différence entre ledit signal de température de la branche chaude et de la branche froide ;
- des moyens de comparaison (11) prévus pour comparer la différence déterminée entre le signal de température de la branche chaude et le signal de température de la branche froide audit point de consigne d'arrêt en surpuissance ;
- des moyens prévus pour réduire la charge de la turbine du réacteur nucléaire quand la différence déterminée entre le signal de température de la branche chaude et le signal de température de la branche froide dépasse le point de consigne d'arrêt en surpuissance ;
**caractérisé en ce que** ledit dispositif comprend un filtre (13) connecté à la première ligne d'entrée (1) et prévu pour recevoir ladite température mesurée dans la branche chaude et pour déterminer ledit signal de température de branche chaude en appliquant un filtrage à ladite température mesurée dans la branche chaude, ledit dispositif comprenant en outre une unité de compensation par avance / retard (14) connectée à la deuxième ligne d'entrée (2) pour recevoir la température mesurée dans la branche froide et prévue pour déterminer ledit signal de température de branche froide en appliquant une compensation par avance / retard à ladite température mesurée dans la branche froide, une sortie dudit filtre et une sortie de ladite unité de compensation par avance / retard étant connectées à une entrée des moyens de détermination de la différence de température (15), ledit dispositif comprend également une unité de point de consigne de réduction de puissance (10) de la turbine en surpuissance prévue pour activer ledit réacteur pour réduire la charge de la turbine quand la différence déterminée entre le signal de température de branche chaude et le signal de température de branche froide dépasse le point de consigne de réduction de puissance de la turbine en surpuissance qui a été fixé.
